(19) Europäisches Patentamt
European Patent Office
Office européen des brevets

(11) **EP 4 177 462 A1**

(12) **EUROPÄISCHE PATENTANMELDUNG**

(43) Veröffentlichungstag:
**10.05.2023 Patentblatt 2023/19**

(21) Anmeldenummer: **21207218.5**

(22) Anmeldetag: **09.11.2021**

(51) Internationale Patentklassifikation (IPC):
**F03D 9/28** *(2016.01)* **F03D 15/00** *(2016.01)*

(52) Gemeinsame Patentklassifikation (CPC):
**F03D 15/00; F03D 9/28;** F05B 2260/406

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Terawind GmbH**
**1220 Wien (AT)**

(72) Erfinder: **KRAMMER, Philip**
**1220 Wien (AT)**

(74) Vertreter: **Weiser & Voith**
**Patentanwälte Partnerschaft**
**Kopfgasse 7**
**1130 Wien (AT)**

(54) **VORRICHTUNG ZUM UMWANDELN VON WINDENERGIE IN ELEKTRISCHE ENERGIE**

(57) Die Erfindung betrifft eine Vorrichtung (1) zum Umwandeln von Windenergie in elektrische Energie, umfassend einen Rotor (3) zum Aufnehmen der Windenergie, eine mit dem Rotor (3) verbundene Hydraulikpumpe (5), einen über eine erste Hydraulikleitung (6) an die Hydraulikpumpe (5) angeschlossenen Hydraulikmotor (7), einen mit dem Hydraulikmotor (7) verbundenen Generator (9) zum Erzeugen der elektrischen Energie, und eine Steuereinrichtung (10) zum Steuern der Hydraulikpumpe (5), wobei die Steuereinrichtung (10) bei Erfüllen eines vorgegebenen Kriteriums die Hydraulikpumpe (5) von einem Pumpbetrieb, in welchem die Hydraulikpumpe (5) vom Rotor (3) angetrieben wird, in einen Motorbetrieb zu versetzen, in welchem die Hydraulikpumpe (5) den Rotor (3) antreibt.

*Fig. 1*

**Beschreibung**

Die vorliegende Erfindung betrifft eine Vorrichtung zum Umwandeln von Windenergie in elektrische Energie. Dazu umfasst die Vorrichtung einen Rotor zum Aufnehmen der Windenergie, eine mit dem Rotor verbundene Hydraulikpumpe, einen über eine erste Hydraulikleitung an die Hydraulikpumpe angeschlossenen Hydraulikmotor, einen mit dem Hydraulikmotor verbundenen Generator zum Erzeugen der elektrischen Energie und eine Steuereinrichtung zum Steuern der Hydraulikpumpe.

Vorrichtungen zum Umwandeln von Windenergie in elektrische Energie - allgemein "Windkraftanlagen" oder "Windenergieanlagen" genannt - haben Rotoren mit einer im Wesentlichen vertikalen oder horizontalen Drehachse. Aufgrund ihres höheren Leistungsbeiwerts und der geringeren auftretenden mechanischen Belastungen werden heute insbesondere im höheren Leistungsbereich meist Rotoren mit horizontaler Drehachse eingesetzt, bei welchen der Rotor z.B. in einer an der Spitze eines Turms oder Mastes angeordneten Gondel gelagert ist. Bei solcher Bauweise ist im Fall einer elektrischen Windenergieanlage in der Gondel unmittelbar der (elektrische) Generator zum Erzeugen elektrischer Energie untergebracht, welcher - meist über ein Getriebe - mit der Rotorwelle verbunden ist; im hier vorliegenden Fall einer hydraulischen Windkraftanlage ist bei solcher Bauweise in der Gondel in der Regel nur die Hydraulikpumpe untergebracht, die über eine Hydraulikleitung den Hydraulikmotor und dieser den Generator antreibt; in diesem Fall sind Hydraulikmotor und Generator also meist außerhalb der Gondel angeordnet, insbesondere im oder neben dem Mast, sodass die Gondel kleiner und/oder der Hydraulikmotor größer sein kann.

Bei niedriger Windgeschwindigkeit unterhalb einer Einschaltgeschwindigkeit von typisch etwa 3 - 4 m/s wird der Rotor einer Windenergieanlage in der Regel stillgesetzt oder in einen lagerschonenden Langsamlauf versetzt. Oberhalb der Einschaltgeschwindigkeit bis zu ihrer Nenndrehzahl wird die Anlage meist "windgeführt" (auch: "drehzahlvariabel") betrieben, d.h. mit einer an die jeweilige Windgeschwindigkeit angepassten Drehgeschwindigkeit, d.h. Drehzahl oder Winkelgeschwindigkeit, des Rotors. Die optimale Drehzahl des Rotors ergibt sich über eine anlagenspezifische Schnelllaufzahl aus der Windgeschwindigkeit. Die Schnelllaufzahl gibt das Verhältnis aus der Umlaufgeschwindigkeit des Rotors (an den Rotorblattspitzen) zur Windgeschwindigkeit an; sie liegt bei üblichen Dreiblattrotoren etwa zwischen 7 und 8. Im windgeführten Betrieb wird die Rotor-Drehgeschwindigkeit meist durch Regelung des Rotorblatt-Anstellwinkels ("Pitch") eingestellt.

Bei noch höherer Windgeschwindigkeit wird zur Schonung der Windenergieanlage und ihrer Komponenten der Rotor durch gezielt sub-optimalen Rotorblatt-Anstellwinkel weiterhin bei seiner Nenndrehgeschwindigkeit betrieben. Dies führt zu einer Reduktion des aerodynamischen Wirkungsgrads der Windenergieanlage.

Bei einer elektrischen Windenergieanlage begrenzen vor allem die Generatornennleistung und die daraus resultierende Größe des Rotors und des Generators in der Gondel die maximale Drehgeschwindigkeit des Rotors. Hydraulische Windkraftanlagen erleichtern eine Auslegung auch für höhere maximale Drehgeschwindigkeiten, da meist nur die Hydraulikpumpe und nicht der Generator selbst in der Gondel angeordnet ist.

Allen Windenergieanlagen ist gemeinsam, dass die Pitchverstellung relativ träge ist. Die Drehgeschwindigkeitsregelung des Rotors bei veränderlicher Windgeschwindigkeit, d.h. bei Windböen, wird dadurch zumindest erschwert die energetische Nutzung kurzer Windböen jedenfalls verhindert. Dies verringert die durch die Vorrichtung nutzbare Windenergie zusätzlich.

Die Erfindung setzt sich zum Ziel, eine Vorrichtung zum Umwandeln von Windenergie in elektrische Energie zu schaffen, welche über einen breiten Windgeschwindigkeitsbereich nutzbar ist und zugleich das Nutzen von kurzzeitigen Änderungen in der Windgeschwindigkeit, d.h. von Windböen, erlaubt.

Das Ziel wird mit einer Vorrichtung der einleitend genannten Art erreicht, welche sich dadurch auszeichnet, dass die Steuereinrichtung dazu ausgebildet ist, die Hydraulikpumpe von einem Pumpbetrieb, in welchem die Hydraulikpumpe vom Rotor angetrieben wird, bei Erfüllen eines vorgegebenen Kriteriums in einen Motorbetrieb zu versetzen, in welchem die Hydraulikpumpe den Rotor antreibt.

Diese Bauweise ermöglicht der erfindungsgemäßen Vorrichtung einen optimierten windgeführten Betrieb: Durch das Umschalten der Hydraulikpumpe vom Pumpbetrieb auf Motorbetrieb wird der Rotor im windgeführten Betrieb der Vorrichtung motorisch beschleunigt und die Rotordrehgeschwindigkeit rasch an eine sich ändernde Windgeschwindigkeit angepasst, sodass die Vorrichtung auch beim Auftreten einer kurzen Windbö den maximalen aerodynamischen Wirkungsgrad erzielt oder diesem zumindest nahekommt. Die rasche Anpassung der Rotordrehgeschwindigkeit an die Windgeschwindigkeit wird einerseits durch das Steuern der Hydraulikpumpe anstelle der viel trägeren Pitchverstellung und andererseits durch das aktive motorische Beschleunigen des Rotors ermöglicht. Lässt die Windbö nach, kann die Rotationsenergie des Rotors durch Erhöhung der Pumpleistung der Hydraulikpumpe umgewandelt und dadurch die Windenergie der Windbö genutzt werden.

In einer Ausführungsform der Vorrichtung speist die Hydraulikpumpe unmittelbar über die erste Hydraulikleitung den Hydraulikmotor. In einer bevorzugten alternativen Ausführungsform ist hingegen in der ersten Hydraulikleitung ein erster Hydraulikspeicher angeordnet. Der erste Hydraulikspeicher kann beispielsweise ein offenes Becken oder geschlossener Behälter auf erhöhtem Niveau, ein Druckspeicher (z.B. ein Windkessel od.dgl.) etc. sein. Der Hydraulikmotor ist über die erste Hydraulikleitung zwar weiterhin an die Hydraulikpumpe angeschlossen, durch den ersten Hydraulikspeicher sind jedoch Rotor und Hydraulikpumpe einerseits und Hydraulikmotor und elektrischer Generator andererseits voneinander insofern entkoppelt, als zum einen die Pumpleistung der Hydraulikpumpe von der Wellenleistung des Hydraulikmotors und zum anderen die Betriebszeiten der Hydraulikpumpe von jenen des Hydraulikmotors (mitsamt dem elektrischen Generator) nicht mehr unmittelbar abhängig sind. Die Hydraulikpumpe kann dadurch jederzeit anfallende Windenergie in den ersten Hydraulikspeicher einspeisen, und der Hydraulikmotor und der elektrische Generator können davon unabhängig in den ersten Hydraulikspeicher eingespeiste Energie je nach Bedarf in elektrische Energie umwandeln. Beispielsweise kann die elektrische Energie im Dauerbetrieb in annähernd konstanter Leistung bzw. zum Abdecken von Bedarfsspitzen in entsprechend variabler Leistung erzeugt werden.

Die Vorrichtung kann ein offenes Hydrauliksystem haben; besonders günstig ist hingegen, wenn die Hydraulikpumpe, die erste Hydraulikleitung, der Hydraulikmotor und eine zweite Hydraulikleitung einen hydraulischen Kreislauf bilden, wobei in der zweiten Hydraulikleitung ein zweiter Hydraulikspeicher angeordnet ist. Das in einem offenen Hydrauliksystem notwendige dauernde Aufbereiten von Hydraulikflüssigkeit für die Hydraulikpumpe kann so entfallen und die Hydraulikflüssigkeit anstelle nach ihrer Verfügbarkeit nach den Erfordernissen der Vorrichtung ausgewählt werden; so kann die Hydraulikflüssigkeit in gleichbleibender, an die Erfordernisse angepasster Qualität zur Verfügung stehen. Der zweite Hydraulikspeicher hat anstelle oder zusätzlich zum ersten Hydraulikspeicher eine mit jenem vergleichbare Wirkung und liegt z.B. auf einem niedrigeren Niveau bzw. hat einen niedrigeren Druck als jener.

In einer vorteilhaften Ausführungsform hat die Vorrichtung einen mit der Steuereinrichtung verbundenen Windsensor zum Erfassen einer Windgeschwindigkeit in einem vorgegebenen luvseitigen Abstand vom Rotor, wobei das vorgegebene Kriterium von der erfassten Windgeschwindigkeit und/oder ihrer Änderung abhängig ist. Der Windsensor, z.B. ein Anemometer bzw. ein Wind-LiDAR, erfasst die Windgeschwindigkeit, bevor der Wind auf den Rotor trifft, und kann dadurch Windböen frühzeitig erkennen. Das Versetzen der Hydraulikpumpe von ihrem Pump- in ihren Motorbetrieb kann auf diese Weise zugleich mit der Änderung der Windgeschwindigkeit des auf den Rotor auftreffenden Windes erfolgen.

Besonders günstig ist dabei, wenn der Windsensor zum Erfassen einer Luftdichte in dem vorgegebenen luvseitigen Abstand vom Rotor ausgebildet ist, wobei das vorgegebene Kriterium ferner von der erfassten Luftdichte abhängig ist. Dadurch lässt sich das vorgegebene Kriterium präziser ermitteln und die Hydraulikpumpe effektiver steuern.

Um das Kriterium für das Versetzen der Hydraulikpumpe vom Pump- in den Motorbetrieb noch genauer bestimmen zu können, hat die Vorrichtung in einer bevorzugten Variante einen mit der Steuereinrichtung verbundenen Drehsensor zum Erfassen einer Drehgeschwindigkeit des Rotors, wobei das vorgegebene Kriterium ferner von der erfassten Drehgeschwindigkeit abhängig ist.

Besonders vorteilhaft ist dabei, wenn die Steuereinrichtung dazu ausgebildet ist, aus der Änderung der erfassten Windgeschwindigkeit eine über ein vorgegebenes Zeitintervall aufnehmbare Windenergie und eine zugehörige Änderung der Rotationsenergie des Rotors zu ermitteln, welche erforderlich ist, damit die Drehgeschwindigkeit des Rotors über das vorgegebene Zeitintervall der Windgeschwindigkeit im Wesentlichen folgt, wobei das vorgegebene Kriterium von den ermittelten Wind- und Rotationsenergien abhängig ist.

Günstig ist in diesem Fall insbesondere, wenn das vorgegebene Kriterium

$$W_{n,12} < 0$$

lautet, mit der im vorgegebenen Zeitintervall aufnehmbaren Windenergie

$$W_{n,12} = \frac{c_{p,\max} \cdot \rho \cdot A}{2} \cdot \left( \frac{a^3 \cdot t_{12}^4}{4} + a^2 \cdot t_{12}^3 \cdot v_1 + \frac{3 \cdot a \cdot t_{12}^2 \cdot v_1^2}{2} + v_1^3 t_{12} \right) - \frac{I}{2} \cdot \left( \omega_2^2 - \omega_1^2 \right) + W_{v,12}$$

wobei

$c_{p,\max}$    der maximale Leistungsbeiwert des Rotors,
$\rho$    die erfasste Luftdichte,
$A$    die Kreisfläche des Rotors,
$t_{12}$    das vorgegebene Zeitintervall zwischen einem aktuellen ersten Zeitpunkt und einem zukünftigen zweiten Zeitpunkt,
$a$    die Änderung der Windgeschwindigkeit im vorgegebenen Zeitintervall,
$v_1$    die Windgeschwindigkeit des am Rotor auftreffenden Windes,
$\omega_1$    die Drehgeschwindigkeit des Rotors zum ersten Zeitpunkt,

$\omega_2$     die Drehgeschwindigkeit des Rotors zum zweiten Zeitpunkt,

I     das Trägheitsmoment des Rotors, und

$W_{v,12}$     eine vorbekannte Verlustenergie der Vorrichtung im vorgegebenen Zeitintervall sind.

Die Drehgeschwindigkeit des Rotors zum zweiten Zeitpunkt wird dabei mithilfe der im luvseitigen Abstand vom Rotor erfassten Windgeschwindigkeit ermittelt. Die aktuelle Windgeschwindigkeit ergibt sich z.B. aus einer zuvor im luvseitigen Abstand vom Rotor erfassten Windgeschwindigkeit. Aus der Differenz der Drehgeschwindigkeiten zum ersten und zum zweiten Zeitpunkt kann exakt bestimmt werden, wann die Hydraulikpumpe vom Pump- in den Motorbetrieb versetzt werden soll und umgekehrt, wann sie wieder in den Pumpbetrieb zurückversetzt werden soll, nämlich wenn in weiterer Folge $W_{n,12} > 0$ gilt. Die Drehgeschwindigkeit des Rotors kann dadurch über das vorgegebene Zeitintervall der Windgeschwindigkeit im Wesentlichen folgen, wobei die Formulierung "im Wesentlichen" bedeutet, dass einerseits Windböen auftreten können, welche eine so rasche Änderung der Windgeschwindigkeit aufweisen, dass der Motorbetrieb der Hydraulikpumpe zum Beschleunigen des Rotors nicht ganz ausreicht, und andererseits, dass gewisse Ungenauigkeiten in der Wind- und der Rotordrehgeschwindigkeit nicht gänzlich auszuschließen sind.

Besonders günstig ist, wenn die Hydraulikpumpe zumindest zwei Pumpeinheiten umfasst, wobei jede Pumpeinheit über ein erstes Steuerventil mit der ersten Hydraulikleitung und über ein zweites Steuerventil mit der zweiten Hydraulikleitung verbunden und die Steuereinrichtung dazu ausgebildet ist, die ersten und zweiten Steuerventile in Abhängigkeit von einem vorgegebenen Drehmoment zu steuern. Ein Regeln der Drehgeschwindigkeit des Rotors und insbesondere ein Versetzen in den Motorbetrieb ist in diesem Fall durch Ansteuerung der Ventile einfach und besonders rasch möglich. Auch ist die Leistung der Hydraulikpumpe einfach skalierbar.

In einer vorteilhaften Ausführungsform ist die Steuereinrichtung ferner dazu ausgebildet, zur Regelung der Drehgeschwindigkeit des Rotors das Drehmoment der Hydraulikpumpe gemäß

$$M_L = \frac{W_{n,12}}{t_{12} \cdot \omega_{soll}}$$

vorzugeben, wobei

$\omega_{soll}$ .. eine gewünschte Drehgeschwindigkeit des Rotors ist.

Der Rotor kann auf diese Weise im windgeführten Betrieb drehgeschwindigkeitsgeregelt werden.

Besonders günstig ist ferner, wenn die zumindest zwei Pumpeinheiten voneinander verschiedene Pumpleistungen aufweisen. Bei gleicher Drehgeschwindigkeit des Rotors fördert dadurch jede Pumpeinheit verschieden viel Hydraulikflüssigkeit. So kann die Geschwindigkeitsregelung der Hydraulikpumpe auf unterschiedlich große Stufen zurückgreifen.

Vorteilhaft ist, wenn die Steuereinrichtung ferner dazu ausgebildet ist, zumindest eine der Pumpeinheiten in Abhängigkeit vom vorgegebenen Drehmoment in einen Leerlaufbetrieb zu versetzen oder abzuschalten. Der Leerlaufbetrieb (bzw. das Abschalten) schafft einen dritten Zustand der einzelnen Pumpeinheiten neben dem (normalen) Pumpen vom zweiten in den ersten Hydraulikspeicher und dem (motorischen) Pumpen vom ersten in den zweiten Hydraulikspeicher, woraus sich zusätzliche Abstufungen in der Regelung der Drehgeschwindigkeit des Rotors ergeben. Der Leerlaufbetrieb bezeichnet dabei z.B. ein Pumpen vom ersten in den ersten (oder alternativ vom zweiten in den zweiten) Hydraulikspeicher oder überhaupt von einem und in einen separaten Leerlaufspeicher; das genannte Abschalten betrifft ein (insbesondere mechanisches) Trennen der Verbindung einzelner Pumpeinheiten zum Rotor.

Die Erfindung wird nachfolgend anhand von in den beigeschlossenen Zeichnungen dargestellten Ausführungsbeispielen näher erläutert. In den Zeichnungen zeigen:

Fig. 1 eine erfindungsgemäße Vorrichtung zum Umwandeln von Windenergie in elektrische Energie in einem schematischen Blockschaltbild;

Fig. 2 eine Variante der Vorrichtung von Fig. 1 in einem schematischen Blockschaltbild;

Fig. 3 einen Ausschnitt der Vorrichtung von Fig. 2 in einem Blockschaltbild; und

die Fig. 4a bis 4c einen beispielhaften Verlauf der Windenergie einer Windbö (Fig. 4a), für die Windbö von Fig. 4a eine Gegenüberstellung der Windenergie mit einer Energie zum Beschleunigen eines Rotors der Vorrichtung von Fig. 1 und einer durch den Rotor aufnehmbaren Windenergie (Fig. 4b) bzw. für die Windbö von Fig. 4a eine Gegenüberstellung von Rotormoment mit einem Drehmoment einer Hydraulikpumpe der Vorrichtung von Fig. 1 (Fig. 4c), jeweils als Diagramm über der Zeit.

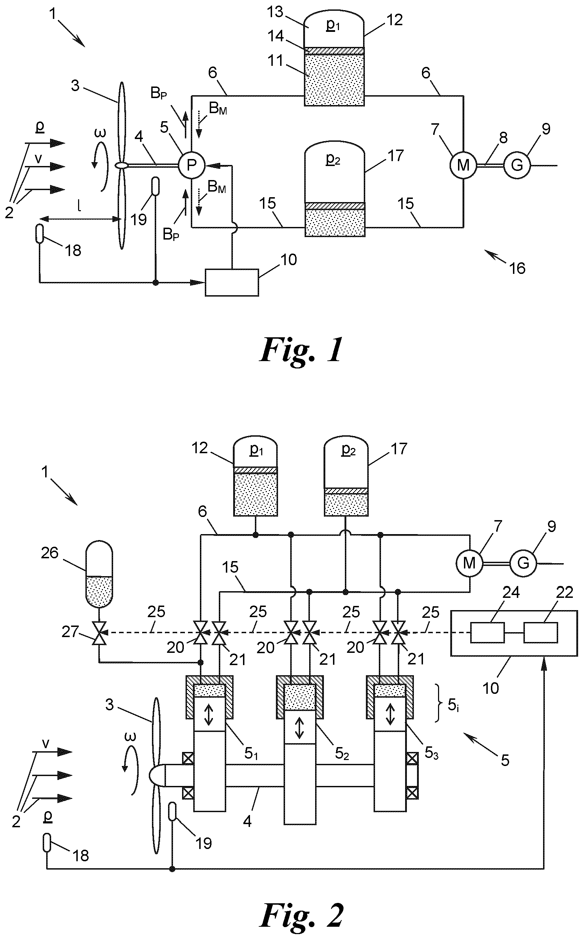

Fig. 1 zeigt eine Vorrichtung 1 zum Umwandeln von Windenergie in elektrische Energie; in der Darstellung ist Wind mit der Geschwindigkeit v durch Pfeile 2 symbolisiert. Die Vorrichtung 1 umfasst einen Rotor 3, welcher die Windenergie aufnimmt. Über eine Rotorwelle 4 des Rotors 3 ist eine Hydraulikpumpe 5 mit dem Rotor 3 verbunden. An die Hydraulikpumpe 5 ist über eine erste Hydraulikleitung 6 ein Hydraulikmotor 7 angeschlossen, sodass die Hydraulikpumpe 5 - unmittelbar oder mittelbar, wie weiter unten näher erläutert wird - den Hydraulikmotor 7 antreibt. Über eine Motorwelle 8 des Hydraulikmotors 7 ist ein Generator 9 mit dem Hydraulikmotor 7 verbunden; der Generator 9 erzeugt die elektrische Energie. Die Vorrichtung 1 umfasst ferner eine Steuereinrichtung 10 zum Steuern der Hydraulikpumpe 5. Die Steuereinrichtung 10 kann optional auch den Rotor 3, den Hydraulikmotor 7 und/oder den Generator 9 steuern.

Im dargestellten Beispiel ist die Rotorwelle 4 horizontal dargestellt. In diesem Fall sind die Rotorwelle 4 und mit ihr der Rotor 3 und die Hydraulikpumpe 5 meist in einer an der Spitze eines Turms oder Masts angeordneten, um eine vertikale Achse drehbaren Gondel (hier nicht dargestellt) gelagert. Alternativ könnte die Rotorwelle 4 im Wesentlichen vertikal ausgerichtet und der Rotor z.B. ein Darrieus-Rotor sein, wobei die Lagerung der Rotorwelle 4 zusammen mit der Hydraulikpumpe 5 in einem Fußsockel angeordnet wären. Der Hydraulikmotor 7 und der Generator 9 können entweder ebenfalls in der Gondel bzw. im Sockel oder separat davon angeordnet sein.

Ist die Windgeschwindigkeit v größer als ein vorgegebenes Minimum (die "Abschalt-", "Einschalt-" bzw. "Anlaufgeschwindigkeit"), wird der Rotor 3 vom Wind 2 angetrieben und nimmt Windenergie auf. Um möglichst viel Windenergie aufzunehmen und einen möglichst hohen Wirkungsgrad zu erzielen, ist die Drehgeschwindigkeit $\omega$ des Rotors 3, d.h. seine Drehzahl oder Winkelgeschwindigkeit, proportional zur Windgeschwindigkeit v; diese Proportionalität wird durch die "Schnelllaufzahl $\lambda$" als Verhältnis der Umlaufgeschwindigkeit an den Rotorblattspitzen zur Windgeschwindigkeit v ausgedrückt und der zugehörige Betriebszustand der Vorrichtung 1 als "windgeführt" (oder "drehzahlvariabel") bezeichnet. Oberhalb einer Nenn-Windgeschwindigkeit, bei welcher der Rotor 3 seine Nenn-Drehgeschwindigkeit erreicht, wird die Drehgeschwindigkeit $\omega$ des Rotors 3 konstant gehalten, um Schäden an der Vorrichtung 1 zu verhindern; der Wirkungsgrad der Vorrichtung 1 ist in diesem Betriebszustand der konstanten Drehgeschwindigkeit $\omega$ reduziert.

Ist im windgeführten Betriebszustand die Windgeschwindigkeit v konstant oder ändert sich nur wenig, pumpt die Hydraulikpumpe 5 vom Rotor 3 angetrieben Hydraulikflüssigkeit 11 unter erhöhtem Druck $p_1$ in die erste Hydraulikleitung 6.

Der Hydraulikmotor 7 wird in einer Ausführungsform der Vorrichtung 1 unmittelbar durch den erhöhten Druck $p_1$ der Hydraulikflüssigkeit 11 in der ersten Hydraulikleitung 6 angetrieben und treibt seinerseits den Generator 9 an. Rotor 3, Hydraulikpumpe 5, Hydraulikmotor 7 und Generator 9 laufen in diesem Fall gleichzeitig. Um das Erzeugen der elektrischen Energie vom Aufnehmen der Windenergie unabhängig zu machen, hat die Vorrichtung 1 in einer dazu alternativen Ausführungsform einen ersten Hydraulikspeicher 12, welcher in der ersten Hydraulikleitung 6 angeordnet ist, d.h. die erste Hydraulikleitung 6 mündet von der Hydraulikpumpe 5 kommend in den ersten Hydraulikspeicher 12 und führt von diesem weiter zum Hydraulikmotor 7. Dadurch speist die Hydraulikpumpe 5 im Pumpbetrieb den ersten Hydraulikspeicher 12 und dieser speist den Hydraulikmotor 7. Die Hydraulikpumpe 5 treibt in diesem Fall den über die erste Hydraulikleitung 6 angeschlossenen Hydraulikmotor 7 mittelbar an.

Der erste Hydraulikspeicher 12 ist z.B. ein geschlossener Druckspeicher mit einem Druckgas 13 in seinem Kopfbereich. Alternativ oder ergänzend kann der erste Hydraulikspeicher 12 z.B. einen - optional über ein Getriebe, Gestänge und/oder Seilzüge - gewichtsbelasteten Kolben 14 haben. In einer weiteren alternativen Variante ist der erste Hydraulikspeicher 12 einfach ein Becken oder Behälter auf erhöhtem Niveau, usw. usf.

Die Hydraulikflüssigkeit 11 kann z.B. Umgebungswasser od.dgl. sein, das die Hydraulikpumpe 5 ansaugt und der Hydraulikmotor 7 wieder an die Umgebung abgibt. Im Beispiel der Fig. 1 bilden hingegen die Hydraulikpumpe 5, die erste Hydraulikleitung 6, der Hydraulikmotor 7 und eine zweite Hydraulikleitung 15 einen geschlossenen hydraulischen Kreislauf 16. In der zweiten Hydraulikleitung 15 ist optional ein zweiter Hydraulikspeicher 17 angeordnet, welcher gegenüber dem (optionalen) ersten Hydraulikspeicher 12 geringeren (oder keinen) Druck $p_2$, geringere (oder keine) Gewichtbelastung und/oder niedrigeres Niveau hat.

Die Steuereinrichtung 10 ist dazu ausgebildet, die Hydraulikpumpe 5 von ihrem Pumpbetrieb, in welchem sie vom Rotor 3 angetrieben wird, in einen Motorbetrieb zu versetzen, in welchem die Hydraulikpumpe 5 den Rotor 3 antreibt, wenn ein vorgegebenes Kriterium erfüllt ist. Im Pumpbetrieb wird Hydraulikflüssigkeit 11 in Richtung der durchgezogenen Pfeile $B_p$ (hier: vom zweiten Hydraulikspeicher 17 über die zweite Hydraulikleitung 15) unter erhöhtem Druck $p_1$ in die erste Hydraulikleitung 6 gepumpt. Im Motorbetrieb treibt umgekehrt die in der ersten Hydraulikleitung 6 unter dem erhöhten Druck $p_1$ stehende Hydraulikflüssigkeit 11 die Hydraulikpumpe 5 und diese ihrerseits den Rotor 3 an, was durch die punktierten Pfeile $B_M$ symbolisiert ist.

Dieses Versetzen der Hydraulikpumpe 5 vom Pumpbetrieb in den Motorbetrieb bewirkt ein motorisches Beschleunigen des Rotors 3 und damit eine rasche (re) Reaktion auf eine sich rasch ändernde Windgeschwindigkeit v, sodass im windgeführten Betriebszustand auch die Windböen innewohnende Windenergie genutzt werden kann.

Optional hat dazu die Vorrichtung 1 einen mit der Steuereinrichtung 10 verbundenen Windsensor 18, z.B. ein Anemometer oder Wind-LiDAR, welcher die Windgeschwindigkeit v in einem vorgegeben luvseitigen Abstand l vom Rotor 3 erfasst. Das genannte vorgegebene Kriterien ist in diesem Fall von der im Abstand l erfassten Windgeschwindigkeit v und/oder ihrer Änderung abhängig. In einer optionalen Variante ist der Windsensor 18 ferner dazu ausgebildet, eine Luftdichte p in dem vorgegebenen luvseitigen Abstand l vom Rotor 3 zu erfassen. In dieser Variante ist das vorgegebene Kriterium ferner von der erfassten Luftdichte p abhängig. Es versteht sich, dass der genannte luvseitige Abstand I in Abhängigkeit von der Umschaltgeschwindigkeit der Hydraulikpumpe 5 von ihrem Pump- in ihren Motorbetrieb und optional von der Windgeschwindigkeit v vorgegeben werden kann.

Optional kann die Vorrichtung 1 einen mit der Steuereinrichtung 10 verbundenen Drehsensor 19, z.B. einen Winkelsensor oder einen Drehzahlsensor umfassen, welcher die Drehgeschwindigkeit $\omega$ des Rotors 3 erfasst. In diesem Fall ist das genannte vorgegebene Kriterium ferner von der erfassten Drehgeschwindigkeit $\omega$ abhängig.

Insbesondere kann die Steuereinrichtung 10 dazu ausgebildet sein, aus der Änderung der erfassten Windgeschwindigkeit v eine über ein vorgegebenes Zeitintervall aufnehmbare Windenergie und eine zugehörige Änderung der Rotationsenergie des Rotors 3, d.h. der kinetischen Energie des Rotors 3 infolge seiner Drehgeschwindigkeit $\omega$, zu ermitteln. Die Änderung der Rotationsenergie ist dabei jene, welche erforderlich ist, um die Drehgeschwindigkeit $\omega$ des Rotors 3 über das vorgegebene Zeitintervall der Windgeschwindigkeit v im Wesentlichen folgen zu lassen. Das vorgegebene Kriterium hängt in diesem Fall von den ermittelten Wind- und Rotationsenergien ab. "Im Wesentlichen" bedeutet in diesem Zusammenhang, dass Änderungen der erfassten Windgeschwindigkeit v aufgrund der Trägheit des Rotors 3 und der Leistung der Hydraulikpumpe 5 im Motorbetrieb nur bis zu einer gewissen Größe gefolgt werden kann, und dass die Windgeschwindigkeit v und die Drehgeschwindigkeit $\omega$ immer gewissen Ungenauigkeiten unterliegen.

In einer optionalen Ausführungsform lautet das vorgegebene Kriterium

$$W_{n,12} < 0 \qquad\qquad (1)$$

mit der im vorgegebenen Zeitintervall aufnehmbaren Windenergie

$$W_{n,12} = \frac{c_{p,\max} \cdot \rho \cdot A}{2} \cdot \left( \frac{a^3 \cdot t_{12}^4}{4} + a^2 \cdot t_{12}^3 \cdot v_1 + \frac{3 \cdot a \cdot t_{12}^2 \cdot v_1^2}{2} + v_1^3 t_{12} \right) - \frac{I}{2} \cdot \left( \omega_2^2 - \omega_1^2 \right) + W_{v,12} \qquad (2)$$

wobei

| | |
|---|---|
| $c_{p,\max}$ | der maximale Leistungsbeiwert des Rotors 3, |
| $\rho$ | die erfasste Luftdichte p, |
| A | die Kreisfläche des Rotors 3, |
| $t_{12}$ | das vorgegebene Zeitintervall zwischen einem aktuellen ersten Zeitpunkt $t_1$ und einem zukünftigen zweiten Zeitpunkt $t_2$, |
| a | die Änderung der Windgeschwindigkeit v im vorgegebenen Zeitintervall, |
| $v_1$ | die Windgeschwindigkeit des am Rotor 3 auftreffenden Windes 2, |
| $\omega_1$ | die Drehgeschwindigkeit des Rotors 3 zum ersten Zeitpunkt $t_1$, |
| $\omega_2$ | die Drehgeschwindigkeit des Rotors 3 zum zweiten Zeitpunkt $t_2$, |
| I | das Trägheitsmoment des Rotors 3, und |
| $W_{v,12}$ | eine vorbekannte Verlustenergie der Vorrichtung 1 im vorgegebenen Zeitintervall $t_{12}$ sind. |

Die Windgeschwindigkeit $v_1$ am Rotor 3 kann entweder über einen weiteren Windsensor (nicht dargestellt) erfasst werden oder ergibt sich aus einer im luvseitigen Abstand I vom Rotor 3 erfassten Windgeschwindigkeit v und der seither verstrichenen Zeit. Die Drehgeschwindigkeit $\omega_2$ des Rotors 3 zum zweiten Zeitpunkt $t_2$ wird aus der im luvseitigen Abstand I vom Rotor 3 erfassten Windgeschwindigkeit v ermittelt, z.B. kann sie durch geeignete Wahl des Zeitintervalls $t_{12}$ unmittelbar mithilfe der Schnelllaufzahl $\lambda$ aus der im luvseitigen Abstand I erfassten Windgeschwindigkeit v errechnet werden oder wird mithilfe der erfassten Windgeschwindigkeit v und der Windgeschwindigkeit $v_1$ am Rotor 3 interpoliert oder extrapoliert.

Die Hydraulikpumpe 5 ist z.B. eine Rotations-, Axial-, Radial- oder Hubkolbenpumpe, eine Zahnrad- oder Schraubspindelpumpe oder eine andere geeignete Hydraulikpumpe 5 und kann eine, zwei oder mehr Pumpeinheiten $5_1$, $5_2$, ..., allgemein $5_i$, haben.

In der in Fig. 2 dargestellten Ausführungsform der Vorrichtung 1 hat die Hydraulikpumpe 5 drei Pumpeinheiten $5_1$, $5_2$ und $5_3$ (hier: Zylinder mit Hubkolben). Jede Pumpeinheit $5_i$ ist über ein eigenes erstes Steuerventil 20 der Hydraulikpumpe 5 mit der ersten Hydraulikleitung 6 und über ein eigenes zweites Steuerventil 21 der Hydraulikpumpe 5 mit der zweiten Hydraulikleitung 15 verbunden. Die Steuereinrichtung 10 ist in diesem Fall dazu ausgebildet, die ersten und zweiten Steuerventile 20, 21 der Hydraulikpumpe 5 in Abhängigkeit von einem vorgegebenen Drehmoment $M_L$ zu steuern. Optional weisen die zumindest zwei Pumpeinheiten $5_i$ voneinander verschiedene Pumpleistungen auf, z.B. sind die Pumpleistungen der Pumpeinheiten $5_i$ kaskadiert, sodass sich bei gleicher Drehgeschwindigkeit $\omega$ des Rotors

3 Pumpleistungen im Verhältnis von z.B. 1 : 2 : 4 etc. ergeben.

Das Drehmoment $M_L$ wird im Allgemeinen in Abhängigkeit von der Windgeschwindigkeit v vorgegeben. Optional ist die Steuereinrichtung 10 dazu ausgebildet, die Drehgeschwindigkeit $\omega$ des Rotors 3 zu regeln und dabei auf Grundlage von Gleichung (2) das Drehmoment $M_L$ der Hydraulikpumpe 5 gemäß

$$M_L = \frac{W_{n,12}}{t_{12} \cdot \omega_{soll}} \qquad\qquad (3)$$

vorzugeben, wobei $\omega_{soll}$ eine gewünschte Drehgeschwindigkeit des Rotors 3 ist.

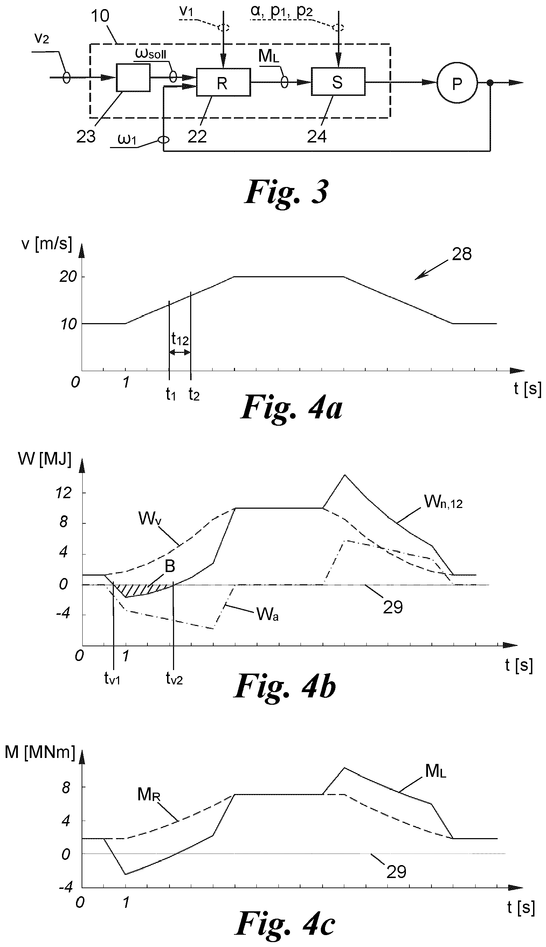

Wie im Beispiel der Fig. 3 dargestellt, hat dazu die Steuereinrichtung 10 eine Regeleinheit 22 zur Regelung der Drehgeschwindigkeit $\omega$ des Rotors 3. Die Regeleinheit 22 erhält vom Drehsensor 19 die Drehgeschwindigkeit $\omega_1$ des Rotors 3 zum ersten Zeitpunkt $t_1$ und vom Windsensor 18 die im luvseitigen Abstand l vom Rotor 3 erfasste Windgeschwindigkeit v, sowie optional die Windgeschwindigkeit $v_1$ am Rotor 3. Daraus ermittelt eine Recheneinheit 23 der Steuereinrichtung 10 die gewünschte Drehgeschwindigkeit $\omega_{soll}$ des Rotors 3. Je nach vorgegebenem Zeitintervall $t_{12}$ kann die gewünschte Drehgeschwindigkeit $\omega_{soll}$ mit der Drehgeschwindigkeit $\omega_2$ zum zweiten Zeitpunkt $t_2$ zusammenfallen; alternativ liegt die gewünschte Drehgeschwindigkeit $\omega_{soll}$ entweder zwischen beiden Drehgeschwindigkeiten $\omega_1$, $\omega_2$ oder aber höher oder tiefer als beide Drehgeschwindigkeiten $\omega_1$, $\omega_2$, z.B. wenn das vorgegebene Zeitintervall $t_{12}$ größer als die Dauer einer Windbö oder so klein ist, dass die gewünschte Drehgeschwindigkeit $\omega_{soll}$ extrapoliert wird.

Die Regeleinheit 22 gibt das Drehmoment $M_L$ einer optionalen Ventilsteuereinheit 24 der Steuereinrichtung 10 vor, welche die ersten und zweiten Steuerventile 20, 21 der Hydraulikpumpe 5 in Abhängigkeit vom Drehmoment $M_L$ und optional von einem Drehwinkel $\alpha$ des Rotors 3 und/oder von einem Druck $p_1$, $p_2$ der Hydraulikflüssigkeit 11 im ersten bzw. zweiten Hydraulikspeicher 12, 17 ansteuert. Es versteht sich, dass dabei die ersten Steuerventile 20 und zweiten Steuerventile 21 jeder Pumpeinheit $5_i$ der Hydraulikpumpe 5 separat angesteuert werden können, wie in Fig. 2 durch die strichliert dargestellten Pfeile 25 versinnbildlicht ist. Ferner könnte die Steuereinrichtung 10 zusätzlich eine Pitchverstellung des Rotors 3 vornehmen, wenn dies in einigen oder allen Betriebszuständen der Vorrichtung 1 gewünscht ist.

Optional kann die Steuereinrichtung 10 dazu ausgebildet sein, zumindest eine der Pumpeinheiten $5_i$ in Abhängigkeit vom vorgegebenen Drehmoment $M_L$ in einen Leerlaufbetrieb zu versetzen oder überhaupt abzuschalten. Diese Situation ist im Beispiel der Fig. 2 durch einen optionalen Leerlaufspeicher 26 versinnbildlicht, in welchen die Pumpeinheit $5_1$ durch Öffnen eines Leerlauf-Steuerventils 27 und gleichzeitiges Schließen der ersten und zweiten Steuerventile 20, 21 Hydraulikflüssigkeit 11 pumpt und aus welchem sie infolge unveränderter Ventilstellungen in weiterer Folge Hydraulikflüssigkeit 11 ansaugt. Es sei angemerkt, dass ein vergleichbarer Leerlaufbetrieb erzielbar ist, wenn während des Pumpens und Ansaugens jeweils nur entweder das erste oder das zweite Steuerventil 20, 21 geöffnet und das jeweils andere Steuerventil 20, 21 geschlossen bleibt. Das Abschalten der Pumpeinheit $5_i$ erfolgt durch Entkoppeln von der Rotorwelle 4 (nicht dargestellt).

Anhand der Fig. 4a bis 4c soll im Folgenden das Umwandeln der Windenergie einer beispielhaften Windbö 28 in elektrische Energie mithilfe der Vorrichtung 1 näher erläutert werden.

Die Windbö 28 ist in Fig. 4a in ihrem Zeitverlauf dargestellt. Dabei hat der Wind 2 zunächst eine Windgeschwindigkeit v von 10 m/s, steigt nach einer Sekunde linear bis zu einem Scheitelwert 20 m/s an, welchen die Windbö 28 nach weiteren 2,5 s erreicht und für 2,5 s hält, worauf die Windgeschwindigkeit v innerhalb von 2,5 s wieder auf den ursprünglichen Wert von 10 m/s abfällt. In Fig. 4a ist ferner ein beispielhaftes Zeitintervall $t_{12}$ zwischen zwei beispielhaften Zeitpunkten $t_1$, $t_2$ dargestellt.

Für die Windbö 28 von Fig. 4a ist in Fig. 4b mit strichlierter Linie die vorhandene Windenergie $W_v$ (in MJ) dargestellt. Die strichpunktierte Linie zeigt dazu die zur Beschleunigung des Rotors 3 notwendige Energie $W_a$, welche im stationären Betrieb entlang der Nulllinie 29 verläuft, beim Beschleunigen aufzubringen und daher negativ ist und beim Verzögern frei wird und dann positiv ist. Die durchgezogene Linie bezeichnet den Verlauf der aufnehmbaren Windenergie $W_{n,12}$ und ist die Summe von vorhandener Windenergie $W_v$ und Beschleunigungsenergie $W_a$. Über den dargestellten Zeitverlauf ist die Hydraulikpumpe 5 zunächst im Pumpbetrieb, und zwar bis zu einem Zeitpunkt $t_{v1}$, zu welchem das vorgegebene Kriterium erfüllt ist (hier: $W_{n,12} < 0$), worauf die Steuereinrichtung 10 die Hydraulikpumpe 5 vom Pumpbetrieb in den Motorbetrieb versetzt, siehe den schraffierten Bereich B unterhalb der Nulllinie 29. Wenn die aufnehmbare Windenergie $W_{n,12}$ die Nulllinie 29 zu einem Zeitpunkt $t_{v2}$ wieder passiert, versetzt die Steuereinrichtung 10 die Hydraulikpumpe 5 vom Motorbetrieb wiederum in den Pumpbetrieb.

Es versteht sich, dass das Versetzen durch eine Änderung des Ansteuerns der ersten und zweiten Steuerventile 20, 21 und/oder des Leerlauf-Steuerventils 27 je nach Erfordernis erfolgt, u.zw. optional separat für die einzelnen Pumpeinheiten $5_i$. Dabei ist die Hydraulikpumpe 5 im Motorbetrieb, wenn die allenfalls separat angesteuerten Pumpeinheiten $5_i$ in Summe den Rotor 3 antreiben, und andernfalls im Pumpbetrieb (oder im Leerlaufbetrieb).

Im Beispiel der Fig. 4b ist erkennbar, dass die aufnehmbare Windenergie $W_{n,12}$ durch das Beschleunigen und Ausnutzen der Windbö 28 trotz des kurzzeitigen Motorbetriebs B der Hydraulikpumpe 5 im Schnitt über die gesamte in diesem Diagramm dargestellte Zeitspanne wesentlich höher ist als ohne Ausnutzung der Windbö 28.

Fig. 4c zeigt die den Beispielen der Fig. 4a und 4b zugehörigen Verläufe des Rotormoments $M_R$ (strichlierte Linie) bzw. des Lastmoments $M_L$ (durchgezogene Linie), hier jeweils in MNm. Es versteht sich, dass das Lastmoment $M_L$, während die Hydraulikpumpe 5 in den Motorbetrieb versetzt ist, ebenfalls negativ ist.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

**Patentansprüche**

1. Vorrichtung zum Umwandeln von Windenergie in elektrische Energie, umfassend

   einen Rotor (3) zum Aufnehmen der Windenergie, eine mit dem Rotor (3) verbundene Hydraulikpumpe (5), einen über eine erste Hydraulikleitung (6) an die Hydraulikpumpe (5) angeschlossenen Hydraulikmotor (7), einen mit dem Hydraulikmotor (7) verbundenen Generator (9) zum Erzeugen der elektrischen Energie und eine Steuereinrichtung (10) zum Steuern der Hydraulikpumpe (5),
   **dadurch gekennzeichnet,**
   **dass** die Steuereinrichtung (10) dazu ausgebildet ist, die Hydraulikpumpe (5) von einem Pumpbetrieb, in welchem die Hydraulikpumpe (5) vom Rotor (3) angetrieben wird, bei Erfüllen eines vorgegebenen Kriteriums in einen Motorbetrieb zu versetzen, in welchem die Hydraulikpumpe (5) den Rotor (3) antreibt.

2. Vorrichtung nach Anspruch 1, **dadurch gekennzeichnet, dass** in der ersten Hydraulikleitung (6) ein erster Hydraulikspeicher (12) angeordnet ist.

3. Vorrichtung nach Anspruch 1 oder 2, **dadurch gekennzeichnet, dass** die Hydraulikpumpe (5), die erste Hydraulikleitung (6), der Hydraulikmotor (7) und eine zweite Hydraulikleitung (15) einen hydraulischen Kreislauf (16) bilden, wobei in der zweiten Hydraulikleitung (15) ein zweiter Hydraulikspeicher (17) angeordnet ist.

4. Vorrichtung nach einem der Ansprüche 1 bis 3, **gekennzeichnet durch** einen mit der Steuereinrichtung (10) verbundenen Windsensor (18) zum Erfassen einer Windgeschwindigkeit (v) in einem vorgegebenen luvseitigen Abstand (1) vom Rotor (3), wobei das vorgegebene Kriterium von der erfassten Windgeschwindigkeit (v) und/oder ihrer Änderung abhängig ist.

5. Vorrichtung nach Anspruch 4, **dadurch gekennzeichnet dass** der Windsensor (18) zum Erfassen einer Luftdichte (ρ) in dem vorgegebenen luvseitigen Abstand (1) vom Rotor (3) ausgebildet ist, wobei das vorgegebene Kriterium ferner von der erfassten Luftdichte (ρ) abhängig ist.

6. Vorrichtung nach Anspruch 4 oder 5, **gekennzeichnet durch** einen mit der Steuereinrichtung (10) verbundenen Drehsensor (19) zum Erfassen einer Drehgeschwindigkeit (ω) des Rotors (3), wobei das vorgegebene Kriterium ferner von der erfassten Drehgeschwindigkeit (ω) abhängig ist.

7. Vorrichtung nach Anspruch 6, **dadurch gekennzeichnet, dass** die Steuereinrichtung (10) dazu ausgebildet ist, aus der Änderung der erfassten Windgeschwindigkeit (v) eine über ein vorgegebenes Zeitintervall ($t_{12}$) aufnehmbare Windenergie und eine zugehörige Änderung der Rotationsenergie des Rotors (3) zu ermitteln, welche erforderlich ist, damit die Drehgeschwindigkeit (ω) des Rotors (3) über das vorgegebene Zeitintervall ($t_{12}$) der Windgeschwindigkeit (v) im Wesentlichen folgt, wobei das vorgegebene Kriterium von den ermittelten Wind- und Rotationsenergien abhängig ist.

8. Vorrichtung nach Anspruch 7, **dadurch gekennzeichnet, dass** das vorgegebene Kriterium

$$W_{n,12} < 0$$

lautet, mit der im vorgegebenen Zeitintervall aufnehmbaren Windenergie

$$W_{n,12} = \frac{c_{p,\max} \cdot \rho \cdot A}{2} \cdot \left( \frac{a^3 \cdot t_{12}^4}{4} + a^2 \cdot t_{12}^3 \cdot v_1 + \frac{3 \cdot a \cdot t_{12}^2 \cdot v_1^2}{2} + v_1^3 t_{12} \right) - \frac{I}{2} \cdot \left( \omega_2^2 - \omega_1^2 \right) + W_{v,12}$$

wobei

$c_{p,\max}$ der maximale Leistungsbeiwert des Rotors (3),
$\rho$ die erfasste Luftdichte (p),
A die Kreisfläche des Rotors (3),
$t_{12}$ das vorgegebene Zeitintervall zwischen einem aktuellen ersten Zeitpunkt ($t_1$) und einem zukünftigen zweiten Zeitpunkt ($t_2$),
a die Änderung der Windgeschwindigkeit (v) im vorgegebenen Zeitintervall ($t_{12}$),
$v_1$ die Windgeschwindigkeit des am Rotor (3) auftreffenden Windes (2),
$\omega_1$ die Drehgeschwindigkeit des Rotors (3) zum ersten Zeitpunkt ($t_1$),
$\omega_2$ die Drehgeschwindigkeit des Rotors (3) zum zweiten Zeitpunkt ($t_2$),
I das Trägheitsmoment des Rotors (3), und
$W_{v,12}$ eine vorbekannte Verlustenergie der Vorrichtung (1) im vorgegebenen Zeitintervall ($t_{12}$) sind.

9. Vorrichtung nach Anspruch 3, **dadurch gekennzeichnet, dass** die Hydraulikpumpe (5) zumindest zwei Pumpeinheiten ($5_i$) umfasst, wobei jede Pumpeinheit ($5_i$) über ein erstes Steuerventil (20) mit der ersten Hydraulikleitung (6) und über ein zweites Steuerventil (21) mit der zweiten Hydraulikleitung (15) verbunden und die Steuereinrichtung (10) dazu ausgebildet ist, die ersten und zweiten Steuerventile (20, 21) in Abhängigkeit von einem vorgegebenen Drehmoment ($M_L$) zu steuern.

10. Vorrichtung nach den Ansprüchen 8 und 9, **dadurch gekennzeichnet, dass** die Steuereinrichtung (10) ferner dazu ausgebildet ist, zur Regelung der Drehgeschwindigkeit ($\omega$) des Rotors (3) das Drehmoment der Hydraulikpumpe (5) gemäß

$$M_L = \frac{W_{n,12}}{t_{12} \cdot \omega_{soll}}$$

vorzugeben, wobei
$\omega_{soll}$ .. eine gewünschte Drehgeschwindigkeit des Rotors (3) ist.

11. Vorrichtung nach Anspruch 9 oder 10, **dadurch gekennzeichnet, dass** die zumindest zwei Pumpeinheiten ($5_i$) voneinander verschiedene Pumpleistungen aufweisen.

12. Vorrichtung nach einem der Ansprüche 9 bis 11, **dadurch gekennzeichnet, dass** die Steuereinrichtung (10) ferner dazu ausgebildet ist, zumindest eine der Pumpeinheiten ($5_i$) in Abhängigkeit vom vorgegebenen Drehmoment ($M_L$) in einen Leerlaufbetrieb zu versetzen oder abzuschalten.

**Fig. 1**

**Fig. 2**

**Fig. 3**

**Fig. 4a**

**Fig. 4b**

**Fig. 4c**

Europäisches
Patentamt

European
Patent Office

Office européen
des brevets

**EUROPÄISCHER RECHERCHENBERICHT**

Nummer der Anmeldung

EP 21 20 7218

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 154 368 A2 (GEN ELECTRIC [US]) 17. Februar 2010 (2010-02-17) * Absatz [0016] – Absatz [0056]; Abbildungen 1-6 * ----- | 1-6,9, 11,12 | INV. F03D9/28 F03D15/00 |
| X | EP 2 949 986 B1 (MITSUBISHI HEAVY IND LTD [JP]) 2. August 2017 (2017-08-02) * Absatz [0025]; Abbildung 2 * ----- | 1,2 | |
| A | US 2013/251499 A1 (RAMPEN WILLIAM [GB]) 26. September 2013 (2013-09-26) * Absatz [0067] – Absatz [0069]; Abbildungen 1-4 * ----- | 1-12 | |
| A | EP 2 261 503 A1 (ARESCO SA [CH]) 15. Dezember 2010 (2010-12-15) * Absatz [0038] – Absatz [0039]; Abbildung 1c * ----- | 1-12 | |

RECHERCHIERTE SACHGEBIETE (IPC)

F03D

Der vorliegende Recherchenbericht wurde für alle Patentansprüche erstellt

| Recherchenort | Abschlußdatum der Recherche | Prüfer |
|---|---|---|
| Den Haag | 12. April 2022 | Herdemann, Claire |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes Dokument

EPO FORM 1503 03.82 (P04C03)

**EP 4 177 462 A1**

## ANHANG ZUM EUROPÄISCHEN RECHERCHENBERICHT
## ÜBER DIE EUROPÄISCHE PATENTANMELDUNG NR.

EP 21 20 7218

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-04-2022

| Im Recherchenbericht angeführtes Patentdokument | Datum der Veröffentlichung | Mitglied(er) der Patentfamilie | Datum der Veröffentlichung |
|---|---|---|---|
| EP 2154368 A2 | 17-02-2010 | CN 101649814 A | 17-02-2010 |
| | | EP 2154368 A2 | 17-02-2010 |
| | | US 2010040470 A1 | 18-02-2010 |
| EP 2949986 B1 | 02-08-2017 | EP 2949986 A1 | 02-12-2015 |
| | | JP 6208625 B2 | 04-10-2017 |
| | | JP 2015224566 A | 14-12-2015 |
| US 2013251499 A1 | 26-09-2013 | CN 102985687 A | 20-03-2013 |
| | | EP 2486273 A1 | 15-08-2012 |
| | | KR 20130047699 A | 08-05-2013 |
| | | US 2013251499 A1 | 26-09-2013 |
| | | WO 2012073389 A1 | 07-06-2012 |
| | | WO 2012073502 A1 | 07-06-2012 |
| EP 2261503 A1 | 15-12-2010 | KEINE | |

EPO FORM P0461

Für nähere Einzelheiten zu diesem Anhang : siehe Amtsblatt des Europäischen Patentamts, Nr.12/82